# FASCICULE DE BREVET EUROPEEN

(11) **EP 0 787 329 B1**
(45) Date de publication et mention de la délivrance du brevet: **12.09.2001**
(21) Numéro de dépôt: 95934696.6
(22) Date de dépôt: 12.10.1995
(51) Int. Cl.: G06F 17/30

(54) **PROCEDE D'IDENTIFICATION D'OBJETS, ESPECES OU INDIVIDUS DIVERS ET APPLICATIONS DE CE PROCEDE**
VERFAHREN ZUR IDENTIFIKATION VON OBJEKTEN, ARTEN ODER VERSCHIEDENEN INDIVIDUEN UND ANWENDUNGEN VON DIESEM VERFAHREN
METHOD FOR IDENTIFYING MISCELLANEOUS OBJECTS, SPECIES OR ITEMS, AND USES THEREOF

(30) Priorité: 17.10.1994 FR 9412360
(43) Date de publication de la demande: 06.08.1997
(73) Titulaire: C.I.R.A.D. (CENTRE DE COOPERATION INTERNATIONAL EN RECHERCHE AGRONOMIQUE POUR LE DEVELOPPEMENT), 34032 Montpellier (FR)
(72) Inventeur: GRARD, Pierre, F-34830 Jacou (FR)
(74) Mandataire: Lerner, François
(86) Numéro de dépôt international: FR9501339
(87) Numéro de publication internationale: WO9612237

(56) Documents cités:
- WO-A-92/01994
- DE-A- 4 211 171
- JOURNAL OF COMPUTING IN HIGHER EDUCATION, FALL 1991, USA, vol. 3, no. 1, ISSN 1042-1726, pages 85-103, RAGAN L C 'Hypermedia in the plant sciences: the Weed Key and Identification System/Videodisc'

## Description

L'invention a pour objet un procédé d'identification d'objets, espèces ou individus divers ainsi que les diverses applications de ce procédé d'identification.

Pour l'identification d'objets, espèces ou individus divers, en particulier pour l'identification des "mauvaises herbes" il existe des systèmes de reconnaissance qui fonctionnent à partir de clés dichotomiques. De façon plus précise, l'art antérieur connu permet d'identifier une espèce grâce à l'élimination par des critères successifs choisis de toutes les espèces qui ne répondent pas aux critères en question. Les inconvénients de ces systèmes experts sont nombreux.

D'une part ils sont complexes et nécessitent pour leur utilisation une connaissance déjà approfondie de la matière.

Ensuite, ces procédés manquent totalement de souplesse car ils font appel à un ordre déterminé des critères que l'on ne peut modifier. Par exemple pour l'identification d'une espèce botanique, il faudra d'abord répondre à des critères généraux tels que par exemple : plante herbacée, ou ne comportant jamais de fleurs, ou de type lianes ligneuses, voire arbustes et arbrisseaux etc. S'il s'agit par exemple d'un arbre, ce qui peut être difficile à identifier si la plante vient juste de germer, on devra répondre par exemple à des questions telles que : portant des cônes ou portant des chatons ; on devra ensuite identifier si les feuilles sont étroites en aiguilles ou par exemple petites squamiformes, etc.

Outre qu'il apparaît clairement que sans une connaissance approfondie de la matière le risque de choix de réponses erronées est grand, il apparaît qu'à partir du moment où une erreur aura été commise, l'espèce à identifier ayant été éliminée n'appparaîtra pas.

En bref et en résumé, ces méthodes connues de l'art antérieur manquent considérablement de souplesse, nécessitent une connaissance approfondie de la matière, n'acceptent pas d'erreur d'observation et de jugement, ne tolèrent pas le manque d'information, exigent une réponse à chaque question et sont de surcroît très longues à mettre en oeuvre.

JOURNAL OF COMPUTING IN HIGHER EDUCATION, Fall 1991, USA, volume 3, N° 1, ISSN 1042-1726, pages 85-103, RAGAN L.C. : "Hypermedia in the plant sciences : the Weed Key and Identification System/Videodisc" décrit un système de recherche pour l'identification d'espèces végétales sur la base de caractéristiques sélectionnées par l'utilisateur. Ce système est conçu pour prendre en compte le cas où certaines données sont manquantes ou incertaines et donc n'utiliser que les informations qu'un utilisateur non entrainé est en mesure de fournir : celui-ci peut ne pas renseigner certains critères ou répondre "incertain" à certains critères afin de ne pas éliminer, par une réponse erronée sur un critère, l'espèce recherchée. Une fois qu'un ou plusieurs critères ont été renseignés, la recherche peut être lancée à tout moment et le système fournit alors une liste des espèces correspondant à ce ou ces critères, ou une réponse négative si aucune espèce n'y répond. L'utilisateur peut obtenir l'affichage de textes et d'images sur la ou les espèce(s) sélectionnée(s).

Ce système reste néanmoins dichotomique par nature, puisqu'en cas de fausse réponse sur un seul critère, les espèces correspondantes sont systématiquement éliminées et ne peuvent être retrouvées qu'en reprenant la recherche avec un ou des critère(s) ou information(s) corrigé(s).

L'invention a pour objet de remédier à ces inconvénients en mettant à disposition de l'utilisateur un procédé d'identification d'objets, espèces ou individus divers, lequel procédé soit d'emploi très souple, ne nécessite pas une connaissance approfondie de la matière pouvant être utilisée par quiconque doué d'un minimum de pouvoir d'observation, tolère des erreurs d'observation et de jugement en évitant l'élimination systématique d'un sujet même si quelques unes des réponses faites aux critères ou caractères d'identification sélectionnés par l'utilisateur s'avèrent erronées et laisse le choix à l'utilisateur des critères ou caractères d'identification auxquels il souhaite répondre.

Le procédé d'identification d'objets, espèces ou individus divers au moyen d'une nomenclature constituée de jeux de caractères d'identification, chaque jeu correspondant à un objet, une espèce ou un individu connu, comprend les étapes suivantes :
- l'utilisateur entre ladite nomenclature dans une mémoire d'un ordinateur,
et se caractérise selon l'invention par l'étape suivante :
- l'utilisateur interroge interactivement ladite nomenclature en entrant successivement dans l'ordinateur, dans l'ordre qu'il veut, des caractères de l'objet, de l'espèce ou de l'individu à identifier, qui semblent déterminants, et qu'il sélectionne chaque fois au préalable en pointant, dans un portrait robot de l'objet, de l'espèce ou de l'individu à identifier, sur celles des parties prédéterminées qui présentent le caractère en question,
- ledit portrait robot étant affiché sur l'écran de l'ordinateur et étant mis à jour au fur et à mesure de l'entrée des caractères sélectionnés, et
- après l'entrée de chaque caractère, l'ordinateur identifie et affiche à l'écran un nombre limité d'objets, d'espèces ou d'individus connus correspondant au moins partiellement aux caractères entrés jusque là, au moyen d'un calcul de probabilités effectué pour chaque objet, espèce ou individu connu répertorié dans la nomenclature, ledit calcul étant fondé sur une pondération entre les caractères.

Avantageusement, après sélection et vérification, on entre éventuellement d'autres critères pour identification (si le sujet sélectionné n'est pas satisfaisant) ou pour contrôle de l'identification précédente (par mesure de sécurité).

Selon un mode de mise en oeuvre préféré du procédé, après sélection ou vérification, on corrige éventuellement certains critères de sélection retenus au départ, en supprimant ces critères ou en les modifiant, ce qui permet d'améliorer la fiabilité du diagnostic.

Dans un mode de réalisation préféré, on fait calculer et afficher par l'ordinateur, en relation avec les objets, espèces ou individus identifiés, une probabilité d'identification correspondant à une pondération entre les critères exacts et les critères non exacts. Avantageusement, pour le calcul de la probabilité effectué par l'ordinateur, on affecte à certains critères un poids plus important qu'à d'autres, ceci en fonction du caractère "discriminant" du critère en question. Ainsi, par exemple si la couleur d'une fleur n'est pas toujours déterminante, le fait que la plante qui porte la fleur a ou non des épines est beaucoup plus déterminant.

Parmi les nombreuses applications du procédé de l'invention, l'attention s'est portée tout particulièrement à l'identification d'espèces botaniques ; dans une telle application, les critères de sélection entrés dans la mémoire et susceptibles d'être choisis par l'utilisateur comprennent des critères et caractères d'identification usuels tels que : port, phyllotaxie, feuilles simples ou composées, épines, type de fleur, type de racine, etc...l'utilisateur choisissant à son gré, et dans l'ordre qui lui semble le plus approprié à son cas d'espèce, les critères de sélection qu'il choisit et qu'il peut "cliquer" sur le portrait robot de l'espèce botanique, lequel portrait robot est au fur et à mesure mis à jour au fil des critères sélectionnés retenus par l'utilisateur.

L'invention et sa mise en oeuvre apparaîtront plus clairement à l'aide de la description qui va suivre faite en relation aux dessins annexés illustrant à titre d'exemple quelques procédures d'identification d'espèces botaniques.

Dans ces dessins :
- la figure 1 illustre ce qui apparaît sur l'écran de l'ordinateur de l'utilisateur en début de procédure d'identification d'une espèce botanique,
- la figure 2 montre un nouvel écran sur lequel l'utilisateur déterminera le port du sujet à identifier,
- la figure 3 montre ce qui apparaît sur l'écran après que le portrait robot ait été modifié par le système de l'ordinateur pour intégrer le port sélectionné par l'utilisateur,
- la figure 4 montre un nouvel écran sur lequel l'utilisateur va sélectionner le type de feuilles correspondant au sujet à identifier,
- la figure 5 montre l'écran suivant dans lequel le portrait robot intégre le nouveau critère supplémentaire sélectionné par l'utilisateur relativement au type de feuilles du sujet,
- la figure 6 indique les espèces sélectionnées par l'ordinateur répondant aux critères entrés en affectant à chaque espèce de la liste une probabilité d'identification qui correspond à la probabilité que l'échantillon corresponde à cette espèce,
- la figure 7 montre l'écran suivant de la procédure dans lequel l'utilisateur est revenu à l'illustration de la figure 5 désirant affiner par un nouveau critère sa sélection,
- la figure 8 illustre l'écran suivant permettant à l'utilisateur de sélectionner le critère supplémentaire retenu à savoir ici la phyllotaxie,
- la figure 9 montre l'écran suivant dans lequel le portrait robot comprend tous les critères précédemment entrés, l'ordinateur n'identifiant cette fois plus qu'une seule espèce qui correspond à 100 % aux critères entrés,
- la figure 10 illustre sous forme de dessin l'espèce identifiée par l'ordinateur pour comparaison par l'utilisateur avec le sujet,
- la figure 11 illustre l'écran suivant dans lequel l'utilisateur a demandé une vue agrandie du dessin et en particulier de la plantule pour vérification de l'identification,
- la figure 12 illustre le portrait robot affiché en fin d'une autre procédure d'identification par l'ordinateur, après que l'utilisateur ait entré plusieurs critères et qu'à partir de ces critères une espèce apparaisse identifiée avec une probabilité assez importante.

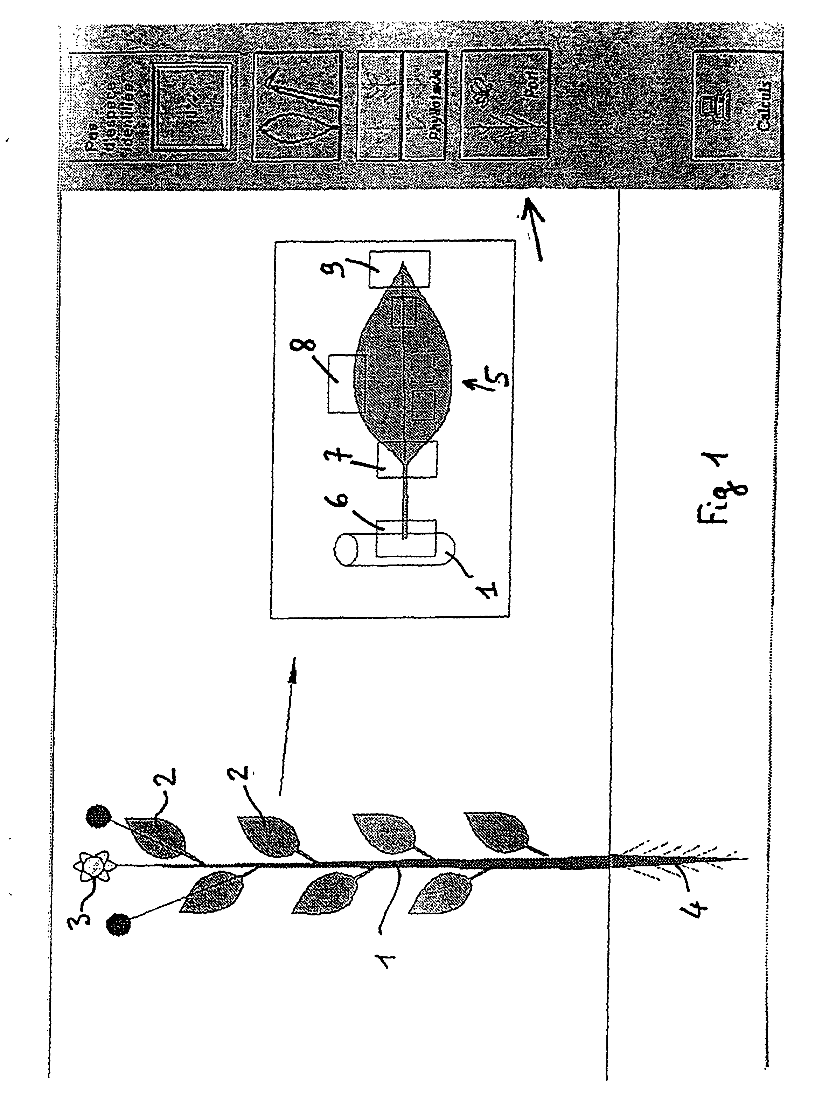

On se reportera tout d'abord à la figure 1 dans laquelle l'utilisateur a devant lui sur l'écran de l'ordinateur un portrait robot type d'une plante comportant essentiellement une tige 1, plusieurs feuilles réparties sur la tige, une fleur 3, des racines 4.

En outre sur la droite de l'écran apparaît à plus grande échelle une feuille 5 avec un certain nombre d'endroits entourés dans des rectangles permettant d'identifier par exemple : en 6 l'implantation de la feuille 5 sur la tige 1, en 7 la naissance de la feuille, en 8 le bord latéral de la feuille, en 9 la terminaison de la feuille etc...

Tout à fait à droite de l'écran apparaissent également des inscriptions en clair et des logos types : respectivement "pas d'espece identifiée" 0 % ; le dessin d'une feuille ou d'une herbe ; "phyllotaxie" ; "port" ; et enfin la mention "calcul". L'utilisation et la signification de ces logos types et expressions apparaîtront ci-après.

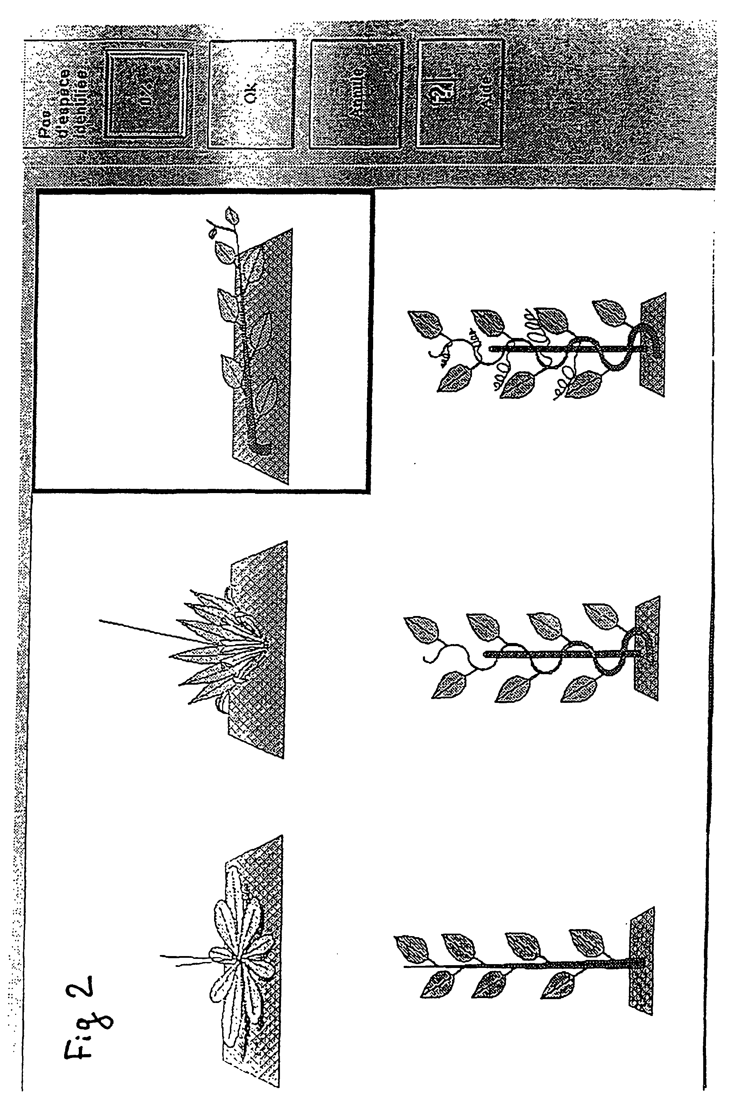

Ayant sous les yeux le sujet à identifier, l'utilisateur remarque tout d'abord que la plante est une plante rampante. Ce critère lui semblant particulièrement déterminant, l'utilisateur "clique" sur le logotype "port" à la figure 1. Selon des procédures classiques en informatique, le logiciel contenu dans l'ordinateur répond à ce "clic" de la souris en affichant comme indiqué à la figure 2 un écran sur lequel figurent plusieurs ports schématisés.

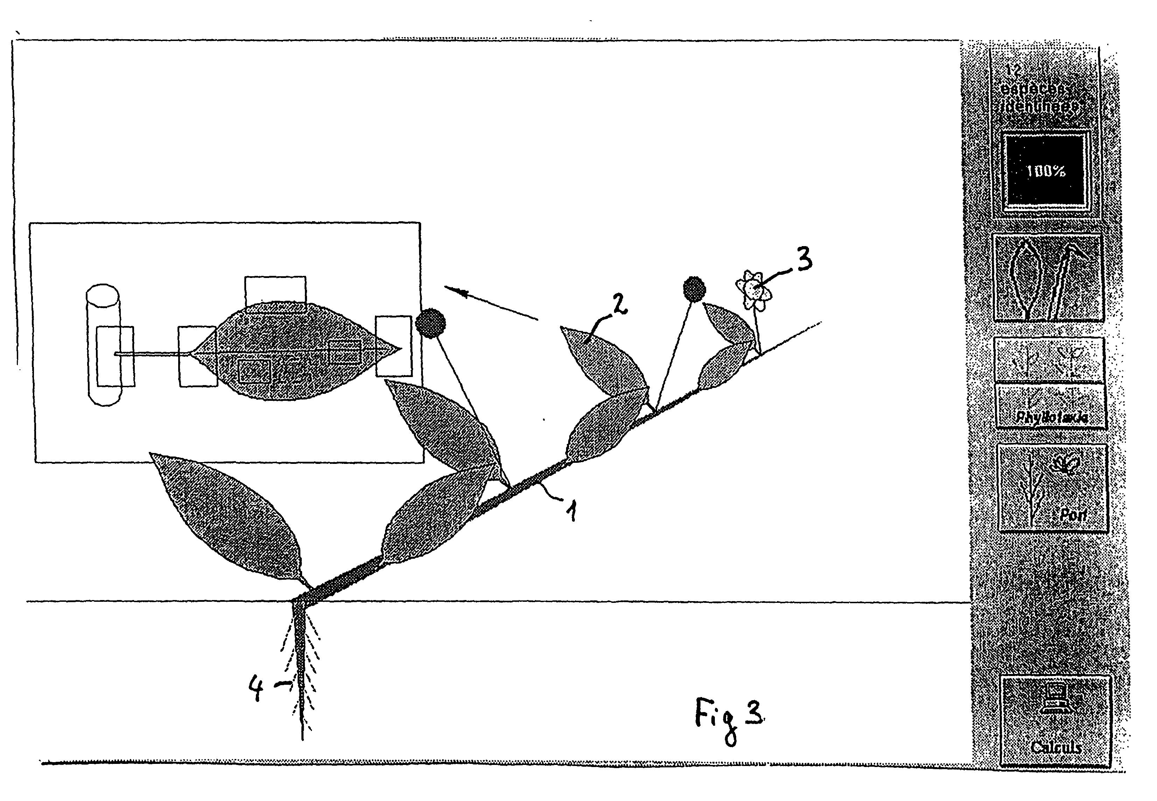

Sur cet écran, l'utilisateur "clique" sur le port couché comme encadré. L'écran suivant apparaît alors à la figure 3 dans laquelle on retrouve le portrait robot de la plante mais qui a été modifié avec un port couché.

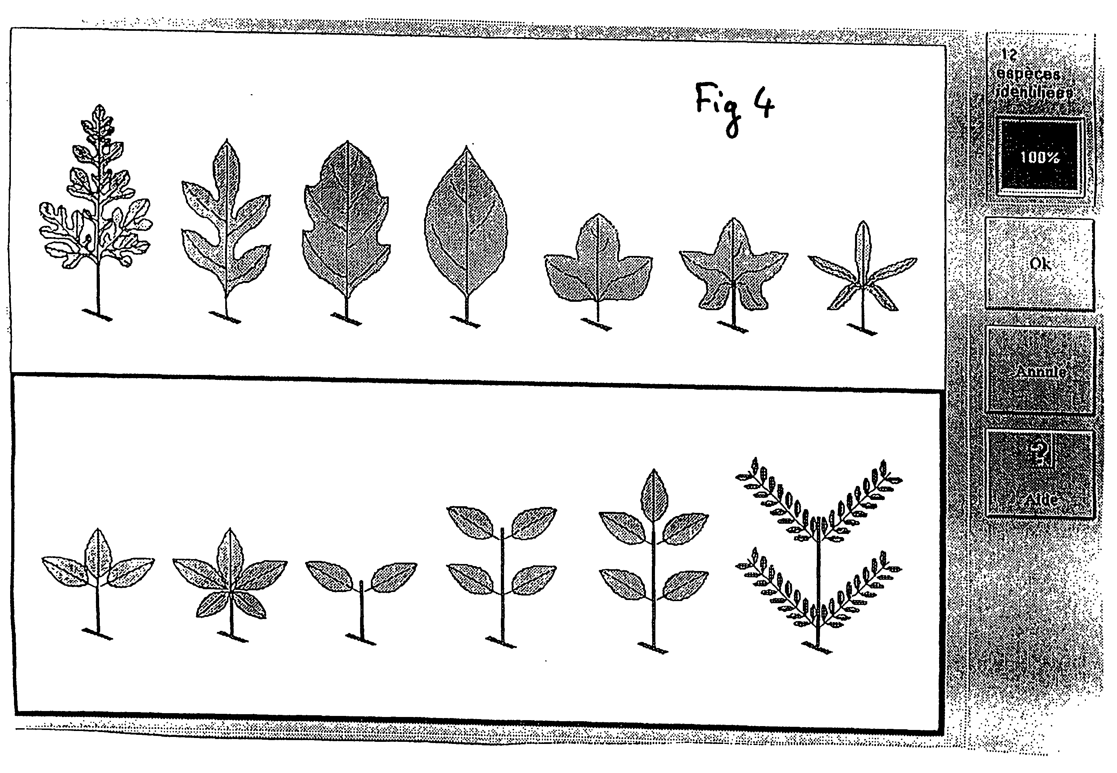

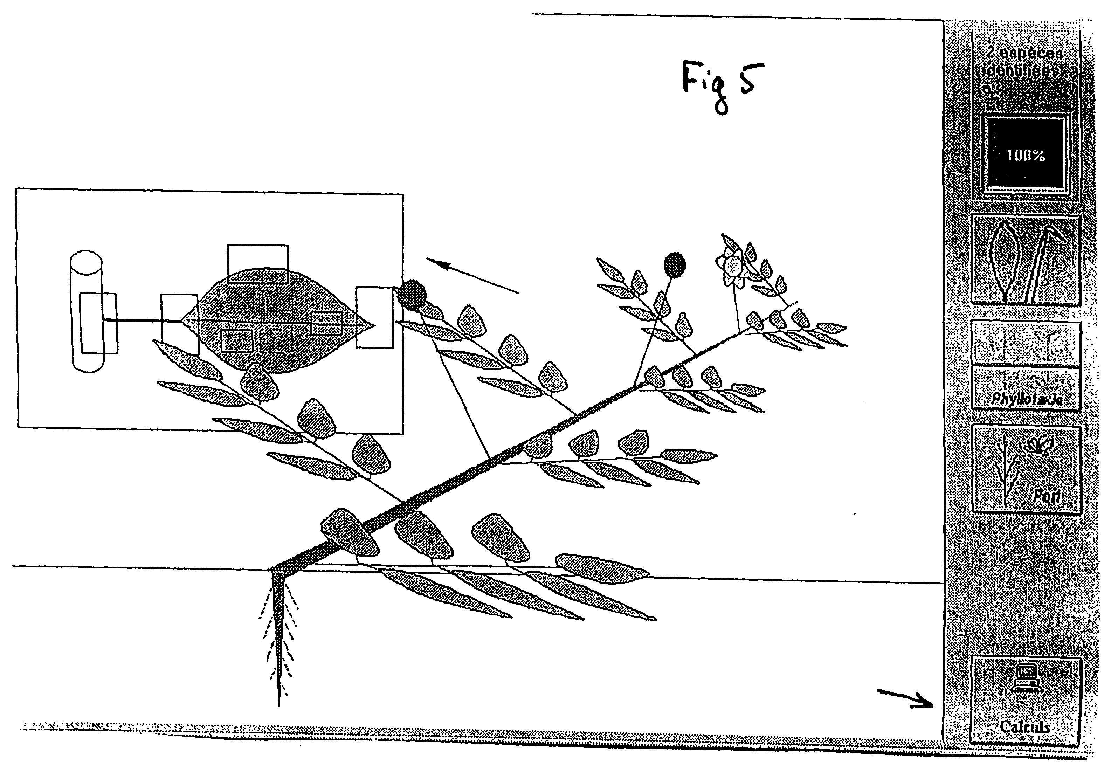

L'utilisateur va maintenant entrer un nouveau critère concernant le type de feuille. Il clique sur une feuille du portrait robot ou à volonté sur le logotype correspondant à droite de l'écran, l'ordinateur affichant l'écran de la figure 4 proposant à l'utilisateur des feuilles simples (en haut de l'écran), ou des feuilles composées (en bas de l'écran). Le sujet ayant des feuilles composées, l'utilisateur clique sur les feuilles composées comme schématisé par le rectangle encadrant la ligne inférieure. A la figure 5 le portrait robot est mis à jour : port couché, feuilles composées. Dans cette situation, il est noté que l'ordinateur affiche "deux espèces identifiées à 100 %" ; ceci signifiant que deux espèces contenues dans la mémoire de l'ordinateur répondent seulement à l'ensemble des critères qui viennent d'être entrés. L'utilisateur peut soit consulter les espèces en question, soit affiner la procédure.

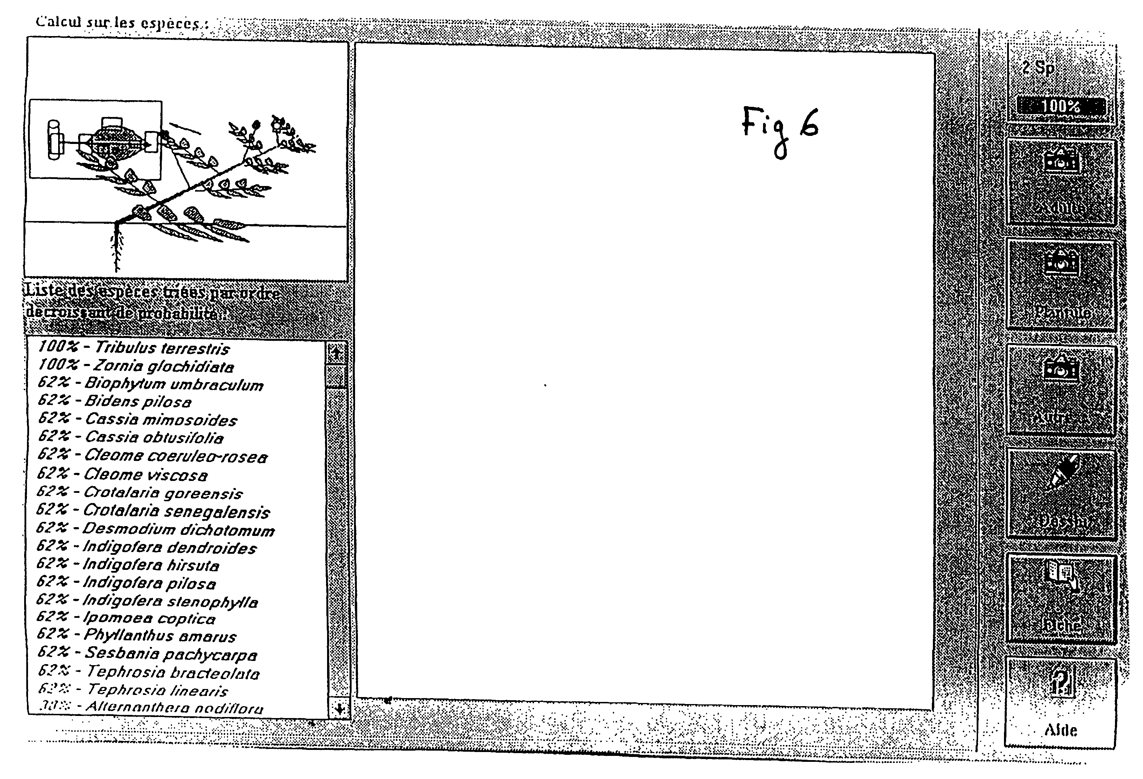

S'il veut consulter la liste des espèces, il clique sur calcul, ce qui fait apparaître l'écran illustré à la figure 6 avec en haut a gauche le rappel en petite dimension du portrait robot mis à jour et en dessous la liste des espèces retenues par poids de probabilité décroissante.

Les deux espèces retenues à 100 % : Tribulus terrestris et Zornia glochidiata signifient que ces deux espèces comportent l'ensemble des critères identifiés. Les autres espèces retenues, avec des pondérations de 62 % à 38 %, signifient que pour ces espèces l'un des critères au moins ne correspond pas.

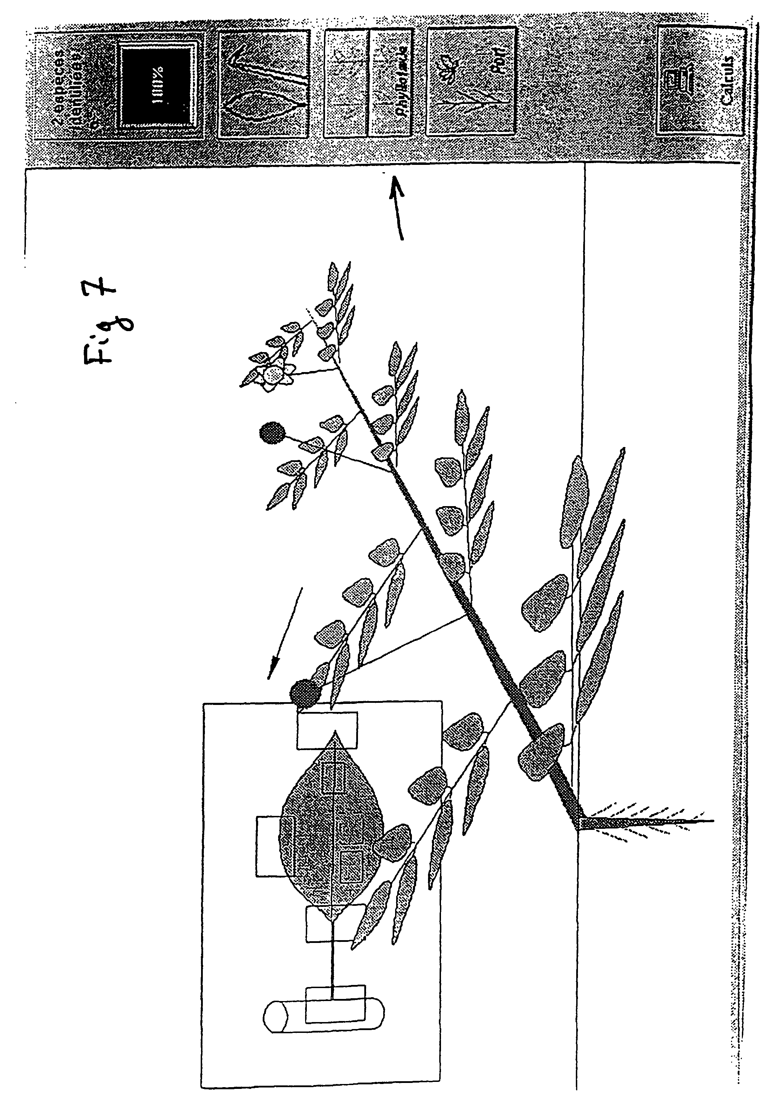

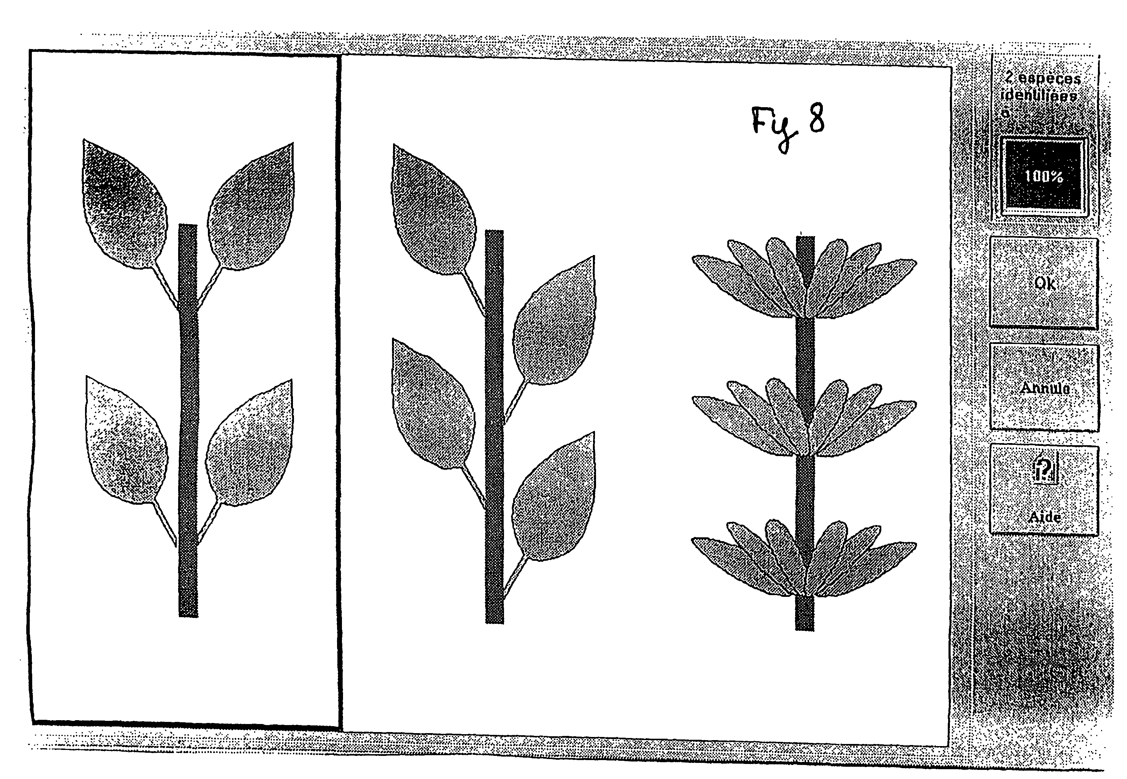

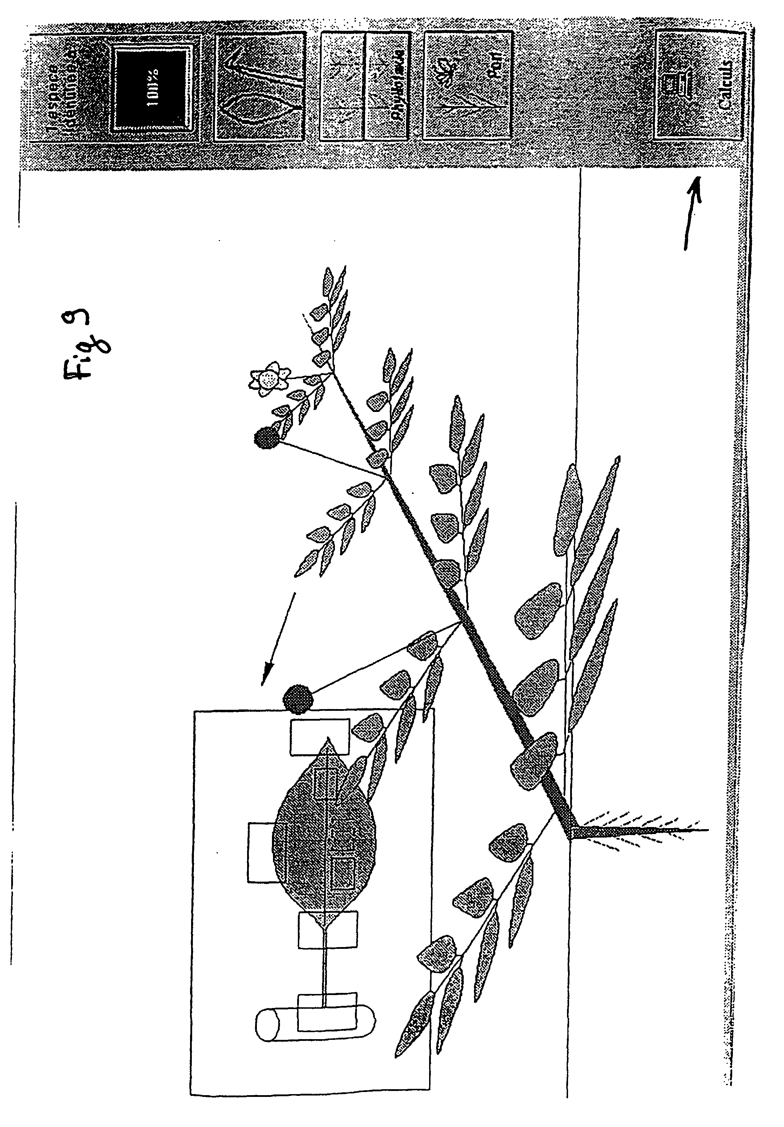

Dans cette situation, l'utilisateur choisit d'affiner la procédure ; il clique sur le portrait robot en haut à gauche de la figure 6 revenant à l'écran de la figure 7 qui est identique à celui de la figure 5. Il clique alors sur "phyllotaxie" ; l'ordinateur affiche l'écran de la figure 8 en proposant trois implantations possible de feuilles sur la tige. L'utilisateur retient la phyllotaxie opposée comme indiqué en encadré à gauche de l'écran de la figure 8. L'ordinateur affiche alors l'écran de la figure 9 en indiquant une seule espece identifiée à 100 %, c'est-à-dire comportant tous les critères retenus.

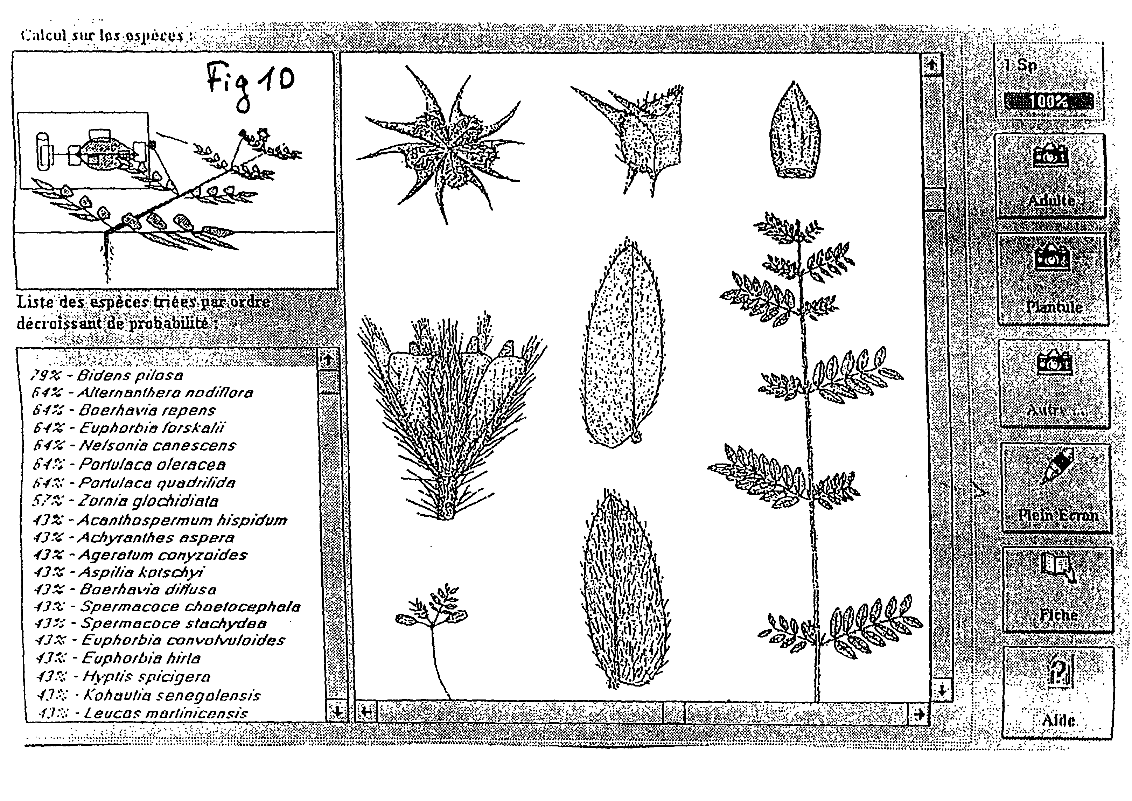

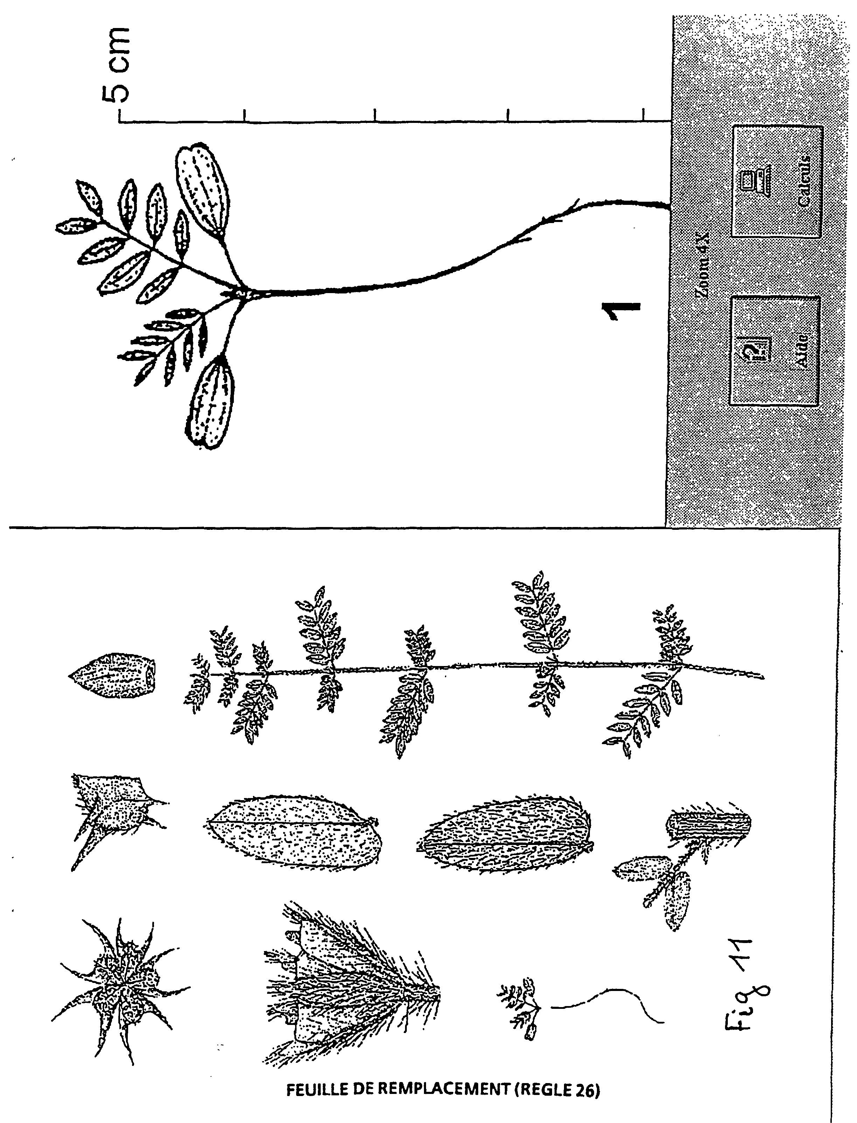

L'utilisateur appelle alors cette espèce et vérifie la concordance des images, photos et dessins avec son sujet. Seul a été illustré le dessin à la figure 10 tel qu'il apparait sur l'ecran. Dans le cas considéré, l'espèce identifiée etait Tribulus terrestris. L'identification est confirmée par vérification comme illustré à la figure 11 d'un dessin plein écran de la plante avec agrandissement de la plantule qui apparaît sur la droite de l'écran.

A la figure 10, on note que l'ordinateur a sélectionné une vingtaine d'espèces différentes et leur a affectué des coefficients de probabilité correspondant au nombre de critères corrects pondérés par l'importance relative des critères comme indiqué plus haut.

On note ainsi par exemple que "Zornia glochidiata" qui avait été identifiée comme correspondant à 100 % à l'écran de la figure 6 n'est plus maintenant retenue qu'avec une probabilité de 57 % ; la différence est due au fait que l'utilisateur a entré un critère supplémentaire important, à savoir la phyllotaxie opposée à laquelle ne repond pas Zornia glochidiata qui n'est donc finalement pas la plante à identifier.

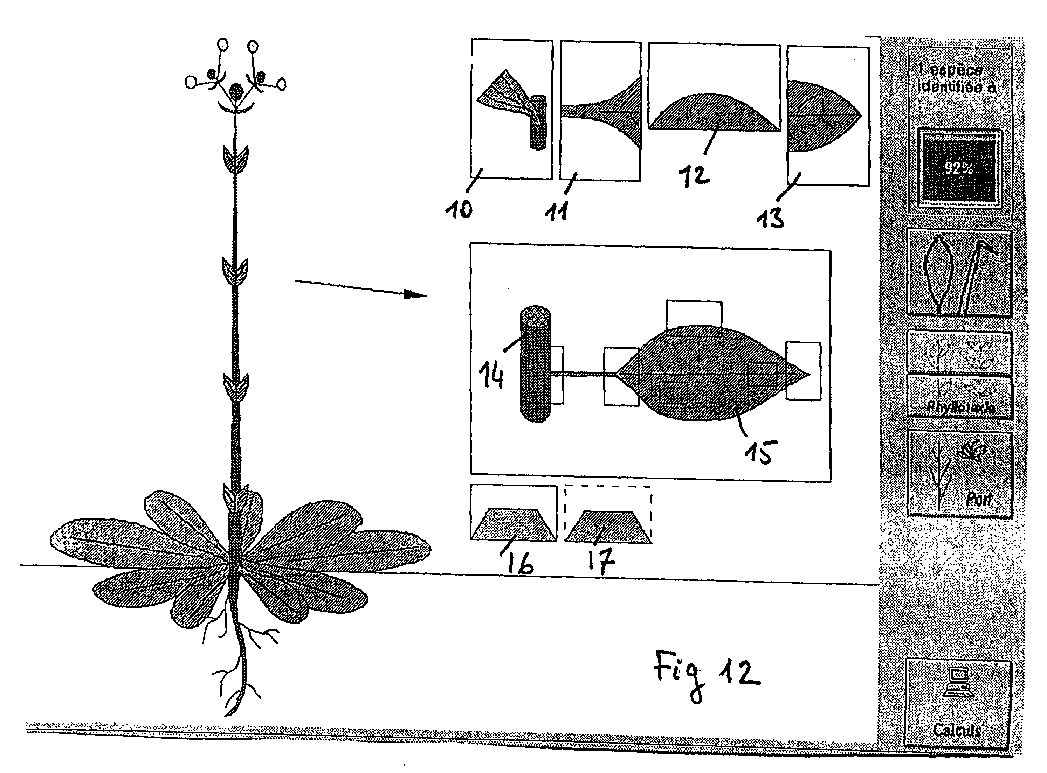

En se referant a la figure 12, on a illustré le cas type où l'utilisateur arrive à identifier assez rapidement et facilement une plante, combien même il s'est trompé dans la détermination de certains critères d'identification.

L'écran de la figure 12 donne le portrait robot d'une plante dont les différents critères tels qu'identifiés dans les différents rectangles référencés 10 à 17 sur la figure ont été entrés pour identification pour l'utilisateur, à savoir respectivement : naîssance de la feuille sur la tige, forme de départ de la feuille, bord latéral de la feuille, pointe de la feuille, section de la tige, forme générale de la feuille, pilosité de la face supérieure de la feuille et pilosite de la face inférieure.

Dans le cas considéré, l'ordinateur a identifié la plante comme étant "mollugo nudicaulis" avec 92 % de probabilité, l'utilisateur s'étant trompé dans l'identification de certains des critères d'importance cependant secondaire. Par comparaison avec l'espèce sélectionnée par l'ordinateur et affichage plein écran des photos et dessins de l'espèce en question, l'utilisateur peut vérifier si l'espèce en question est la bonne. Si tel n'est pas le cas, il peut se reporter aux espèces suivantes qu'il peut consulter en vérifiant avantageusement d'abord les espèces sélectionnées par l'ordinateur par ordre décroissant de probabilité.

Eventuellement, l'utilisateur peut à ce stade également corriger par vérification tel ou tel critère qu'il a entré de façon erronée ou encore ajouter un critère supplémentaire, tel que par exemple phyllotaxie ou présence ou non d'une fleur ou encore forme des racines et implantation, ceci en cas de doute ou pour verification de l'exactitude du diagnostic.

De la description qui precède, il apparaît que le procédé d'identification de l'invention présente une très grande souplesse d'emploi, car il est très tolérant face au manque d'informations, voire à l'erreur des critères ou caractères secondaires dont l'identification n'est pas toujours aisée. Bien entendu, l'identification sera faite d'autant plus rapidement que l'utilisateur entrera des critères déterminants, c'est-à-dire de poids important et d'identification fiable.

En outre, bien que l'invention ait été illustrée en relation avec l'identification d'espèces botaniques, il apparaît clairement que le procédé peut également être utilisé en relation avec l'identification de n'importe quels objets ou individus que l'on peut definir par des critères quelconques, d'aspect, de forme, de poids et de façon générale présentant n'importe quelles qualites intrinseques. L'invention pourrait ainsi être utilisee par exemple dans l'identification de personnes, dans l'identification d'objets industriels, etc. Ses applications les plus immédiates et utiles semblent devoir concerner l'identification dans le domaine biologique, par exemple des virus, champignons, animaux, variétés agricoles et végétaux. Les exemples de mise en oeuvre indiqués en relation avec l'identification de quelques variétes botaniques peuvent être immédiatement extrapolés à une identification élargie à tout le domaine biologique.

## Revendications

1. Procédé d'identification d'objets, espèces ou individus divers au moyen d'une nomenclature constituée de jeux de caractères d'identification, chaque jeu correspondant à un objet, une espèce ou un individu connu, le procédé comprenant les étapes suivantes :
- l'utilisateur entre ladite nomenclature dans une mémoire d'un ordinateur,
le procédé étant **caractérisé par** les étapes suivantes :
- l'utilisateur interroge interactivement ladite nomenclature en entrant successivement dans l'ordinateur, dans l'ordre qu'il veut, des caractères de l'objet, de l'espèce ou de l'individu à identifier, qui semblent déterminants, et qu'il sélectionne chaque fois au préalable en pointant, dans un portrait robot de l'objet, de l'espèce ou de l'individu à identifier, sur celles des parties prédéterminées qui présentent le caractère en question,
- ledit portrait robot étant affiché sur l'écran de l'ordinateur et étant mis à jour au fur et à mesure de l'entrée des caractères sélectionnés, et
- après l'entrée de chaque caractère, l'ordinateur identifie et affiche à l'écran un nombre limité d'objets, d'espèces ou d'individus connus correspondant au moins partiellement aux caractères entrés jusque là, au moyen d'un calcul de probabilités effectué pour chaque objet, espèce ou individu connu répertorié dans la nomenclature, ledit calcul étant fondé sur une pondération entre les caractères.

2. Procédé selon la revendication 1, **caractérisé en ce qu'**après chaque étape d'identification et d'affichage, l'utilisateur entre éventuellement d'autres caractères pour affiner ou contrôler l'identification précédente.

3. Procédé selon la revendication 1 ou la revendication 2, **caractérisé en ce qu'**après chaque étape d'identification et d'affichage, l'utilisateur corrige éventuellement certains caractères déjà entrés en supprimant ces caractères ou en les modifiant.

4. Procédé selon l'une des revendications précédentes **caractérisé en ce que** pour le calcul de probabilités, l'ordinateur affecte à certains caractères un poids plus important qu'à d'autres.

5. Application du procédé d'identification selon l'une quelconque des revendications précédentes à l'identification d'espèces dans le domaine biologique, **caractérisée en ce que** lesdits caractères d'identification entrés dans la mémoire de l'ordinateur et susceptibles d'être sélectionnés par l'utilisateur comprennent des caractères d'identification usuels tels que par exemple, pour la reconnaissance d'une espèce botanique : port, phyllotaxie, feuilles simples ou composées, épines, type de fleur, type de racine, l'utilisateur choisissant à son gré et dans l'ordre qui lui semble le plus approprié à son cas d'espèce, les caractères d'identification qu'il sélectionne.

## Patentansprüche

1. Verfahren zur Identifikation von Objekten, Arten oder verschiedenen Individuen mittels einer Nomenklatur, die aus einer Gruppe von Identifikationsmerkmalen gebildet wird, wobei jede Gruppe einem Objekt, einer Art oder einem bekannten Individuum entspricht, wobei das Verfahren die folgenden Schritte aufweist:
- der Benutzer gibt die Nomenklatur in einen Speicher eines Computers ein, wobei das Verfahren durch die folgenden Schritte gekennzeichnet ist:
- der Benutzer fragt die Nomenklatur interaktiv ab, indem er nacheinander in der Reihenfolge, welche er wünscht, Merkmale des Objektes, der Art oder des zu identifizierenden Individuums, welche bestimmend erscheinen, in den Computer eingibt und die er jedes Mal vorher auswählt, indem er auf einem elektronischen Bild des Objektes, der Art oder des zu identifizierenden Individuums auf diejenigen der vorbestimmten Teile zeigt bzw. klickt, die das in Frage stehende Merkmal aufweisen,
- wobei das elektronische Bild auf dem Schirm des Computers gezeigt wird und je nach der Eingabe der ausgewählten Merkmale aktualisiert wird und
- nach der Eingabe jedes Merkmals der Computer auf dem Schirm eine begrenzte Anzahl von Objekten, Arten oder bekannten Individuen entsprechend wenigstens zum Teil den bis dahin eingegebenen Merkmalen mittels einer Wahrscheinlichkeitsrechnung identifiziert und anzeigt, die für jedes Objekt, Art oder bekanntes Individuum, das in der Nomenklatur verzeichnet ist, durchgeführt wird, wobei sich die Rechnung auf eine Gewichtung der Merkmale stützt.

2. Verfahren nach Anspruch 1, **dadurch gekennzeichnet, daß** nach jedem Schritt der Identifikation und der Anzeige der Benutzer gegebenenfalls andere Merkmale eingibt, um die vorangegangene Identifikation zu verfeinern oder zu kontrollieren.

3. Verfahren nach Anspruch 1 oder nach Anspruch 2, **dadurch gekennzeichnet, daß** nach jedem Schritt der Identifikation und Anzeige der Benutzer gegebenenfalls bestimmte, schon eingegebene Merkmale korrigiert, indem diese Merkmale weggelassen oder verändert werden.

4. Verfahren nach einem der vorhergehenden Ansprüche, **dadurch gekennzeichnet, daß** der Computer für die Wahrscheinlichkeitsrechnung bestimmten Merkmalen eine größere Bedeutung beimißt als anderen.

5. Anwendung des Identifikationsverfahrens nach einem der vorhergehenden Ansprüche zur Identifikation von Arten aus dem biologischen Bereich, **dadurch gekennzeichnet, daß** die in den Speicher des Computers eingegebenen Identifikationsmerkmale, die geeignet sind, durch den Benutzer ausgesucht zu werden, gewöhnliche Identifikationsmerkmale aufweisen, wie zum Beispiel für die Erkennung einer botanischen Art: Wuchs, Blattstellung, einfache oder zusammengesetzte Blätter, Dornen, Blumentyp, Wurzeltyp; wobei der Benutzer nach seinem Ermessen und in der Reihenfolge, die ihm in seinem Fall für die Art am geeignetsten erscheint, die Identifikationsmerkmale, die er selektiert, auswählt.

## Claims

1. Method for identifying miscellaneous objects, species or items to which corresponds a list of identifying criteria or features, **characterised in that**:
- said list is entered in an access dictionary or memory of a computer
- the list is interrogated by entering in any desired order each time by comparison with the object, species or item to be identified, a feature or criterion which seems to be determining and which is located by "clicking", in a composite picture of the object, species or item to be identified, onto the portion which has the feature in question,
- the composite picture being displayed on the computer screen and being updated as the selected criteria are retained, and
- the object(s), species or item(s) identified are selected and verified when the selection criteria chosen, which were the subject of the interrogations entered in the computer, appear to correspond fairly closely to a reduced number of identifiable objects, species or items meeting at least some of the selected interrogation criteria, the reduced number being the consequence of the calculation of the weight calculation of probabilities effected for each known object, species or item appearing in the list, the calculation being based on a weighting between the features.

2. Method according to Claim 1, **characterised in that**, after each identification and display step, other features are optionally entered by the user to refine or check the previous identification.

3. Method according to Claim 1 or Claim 2, **characterised in that**, after each identification and display step, the user optionally corrects given features already entered by removing those features or by modifying them.

4. Method according to any one of the preceding claims, **characterised in that**, for the calculation of probabilities, the computer allocates a greater weight to some features than to others.

5. Application of the method of identification according to any one of the preceding claims to the identification of species in the biological field, **characterised in that** the identifying features which have been entered in the computer memory and which can be selected by the user comprise usual identifying features, such as, for example, for recognition of a botanical species: habit, phyllotaxis, simple or composite leaves, thorns, type of flower, type of root, the user choosing, as desired, and in the order which he considers the most appropriate to the case in point, the identifying features which he selects.
